# FASCICULE DE BREVET EUROPEEN

(11) **EP 0 961 886 B1**
(45) Date de publication et mention de la délivrance du brevet: **21.05.2003**
(21) Numéro de dépôt: 98963584.2
(22) Date de dépôt: 22.12.1998
(51) Int. Cl.: F16F 15/134, F16F 1/12, F16F 3/04

(54) **DISPOSITIF ELASTIQUE D'ORIENTATION RADIALE POUR UN VOLANT AMORTISSEUR DOUBLE DE TRANSMISSION DE VEHICULE AUTOMOBILE**
RADIAL ORIENTIERTE, ELASTISCHE VORRICHTUNG FÜR EIN ZWEIMASSENSCHWUNGRAD FÜR DIE ANTRIEBSKETTE EINES KRAFTFAHRZEUGES
RADIALLY ORIENTED ELASTIC DEVICE FOR MOTOR VEHICLE TRANSMISSION DOUBLE DAMPER FLYWHEEL

(30) Priorité: 23.12.1997 FR 9716368
(43) Date de publication de la demande: 08.12.1999
(73) Titulaire: VALEO EMBRAYAGES, 80009 Amiens Cedex 1 (FR)
(72) Inventeur: TARDIVEAU, Christophe, F-75018 Paris (FR); GRIECO, Giovanni, F-92700 Paris (FR)
(74) Mandataire: Gamonal, Didier
(86) Numéro de dépôt international: FR9802817
(87) Numéro de publication internationale: WO99034130

(56) Documents cités:
- WO-A-94/27062
- FR-A- 2 734 331
- FR-A- 2 741 927
- FR-A- 2 742 507
- US-A- 3 885 778
- US-A- 5 224 689

## Description

La présente invention concerne un dispositif élastique pour un double volant amortisseur destiné à être implanté radialement pour accoupler élastiquement les deux masses tournantes du double volant.

L'invention concerne plus particulièrement un dispositif élastique pour un double volant amortisseur pour véhicule automobile comportant une première masse tournante propre à être liée en rotation à un arbre menant, une deuxième masse tournante montée tourillonnante sur la première masse à l'aide d'un palier et adaptée à former le plateau de réaction d'un embrayage à friction propre à être lié en rotation de manière débrayable à un arbre mené, et une série de dispositifs élastiques implantés selon une direction générale radiale pour accoupler élastiquement la seconde masse tournante à la première masse tournante, chacun des dispositifs élastiques étant monté à articulation, d'une part sur la première masse tournante par l'intermédiaire d'un premier axe parallèle à l'axe de rotation du double volant, et d'autre part sur la seconde masse tournante par l'intermédiaire d'un second axe, parallèle au premier axe.

Un exemple d'une telle conception est décrit et représenté dans le document WO-A-94/27.062.

Dans ce document, chaque dispositif élastique est du type comportant des moyens élastiques susceptibles d'être comprimé axialement entre deux éléments télescopiques comprenant :
- un premier élément comportant une première tête, pour son articulation sur une première masse tournante, qui se prolonge axialement par une tige centrale qui traverse les moyens élastiques et qui se termine par une première rondelle d'appui qui s'étend radialement vers l'extérieur en regard d'une première extrémité des moyens élastiques ; et
- un second élément comportant une seconde tête, pour son articulation sur la seconde masse tournante, qui se prolonge axialement par un corps externe de forme générale tubulaire qui entoure les moyens élastiques et qui se termine par une seconde rondelle d'appui qui s'étend radialement vers l'intérieur en regard de la seconde extrémité des moyens élastiques et qui est traversée par la tige centrale du premier élément.

Selon la conception proposée dans ce document, ainsi que dans d'autres variantes de mise en réalisation de cette conception qui en constituent des perfectionnement, les moyens élastiques sont constitués par un ressort hélicoïdal, à boudin, de compression dont les deux extrémités axiales opposées sont en appui mutuel contre les deux rondelles d'appui.

Afin d'assurer correctement leur fonction d'amortissement élastique, chaque dispositif fait appel à un ressort dimensionné de manière importante et qui en conséquence, compte tenu des nécessités de réduction de l'encombrement global de ces dispositifs, est adjacent à la face interne du second élément tubulaire contre laquelle il est donc en contact de frottement, cet agencement étant par ailleurs nécessaire pour assurer un bon maintien et un bon guidage du ressort, évitant ainsi des mouvements parasites générateurs de bruit.

Toutefois, cette conception a pour inconvénient que, en fin d'intervention de chaque dispositif élastique, le ressort hélicoïdal se comprime en générant des efforts de frottement avec la paroi interne du second élément tubulaire associé.

L'apparition de ces efforts de frottement en fin de la course d'intervention des dispositifs élastiques est nuisible au bon fonctionnement général du double volant amortisseur.

En effet, il est par ailleurs connu d'incorporer au double volant amortisseur des moyens de frottement à action axiale qui créent un frottement qui permet de mieux filtrer les vibrations, engendrées par le moteur à combustion interne.

Il est donc souhaitable, tout en conservant la même course totale globale pour les dispositifs à ressort, de diminuer les frottements produits par ceux-ci à la fin de leur intervention, et ceci afin de mieux filtrer globalement les vibrations correspondants aux acyclismes du moteur. En outre, il faut éviter, dans un double volant amortisseur, que l'un des dispositifs élastiques ne se bloque.

La présente invention a pour but de proposer une nouvelle conception des éléments télescopiques d'un dispositif élastique du type de celui décrit et représenté dans le document WO-A-94/27.062 qui remédie à ces inconvénients.

Dans ce but, l'invention propose un dispositif élastique caractérisé en ce que les moyens élastiques comportent au moins deux ressorts de raideurs différentes qui sont montés axialement en série entre les première et seconde rondelles d'appui, qui sont traversés par la tige centrale, et parmi lesquels un premier ressort, de raideur la plus forte, intervient sans frottement entre son corps et la surface interne du corps tubulaire du second élément.

Grâce à l'invention, lorsque le second ressort vient à spire jointives, on bénéficie encore d'une élasticité sans que le premier ressort vienne frotter contre le corps et donc perturber les dispositifs de frottement. Le second ressort ne n'est pas actif dans la deuxième phase et donc pas gênant.

Selon d'autres caractéristiques de l'invention :
- une rondelle intermédiaire est interposée axialement entre les extrémités en vis-à-vis des deux ressorts en série ;
- ledit premier ressort est un ressort hélicoïdal de compression dont le diamètre extérieur moyen est inférieur au diamètre interne du corps tubulaire du second élément de manière à ménager un jeu radial entre le premier ressort et le corps tubulaire ;
- l'extrémité du premier ressort hélicoïdal adjacente au second des deux ressorts est guidée en coulissement le long de la tige centrale par l'intermédiaire d'un patin annulaire de glissement:
   - ledit premier ressort est une rondelle élastique ;
   - le second des deux ressorts montés en série, de raideur la plus faible, est un ressort hélicoïdal de compression ;
   - le second ressort est constitué par deux ressorts hélicoïdaux coaxiaux intervenant simultanément et en parallèle ;
   - la première rondelle d'appui est guidée en coulissement le long de la surface interne du corps tubulaire du second élément par l'intermédiaire d'un patin annulaire de glissement pour réduire les frottements.
   - la seconde rondelle d'appui est guidée en coulissement le long de la tige centrale par l'intermédiaire d'un patin annulaire de glissement pour réduire les frottements.

D'autres caractéristiques et avantages de l'invention apparaîtront à la lecture de la description détaillée qui suit pour la compréhension de laquelle on se reportera aux dessins annexés dans lesquels :
- la figure 1 est une vue latérale, illustrée pour moitié en coupe selon un plan radial, d'un double volant amortisseur équipé de dispositifs élastiques télescopiques selon l'état de la technique ;
- la figure 2 est une vue en section axiale du double volant amortisseur de la figure 1 ;
- la figure 3 est une vue en section longitudinale d'un premier mode de réalisation d'un dispositif élastique conforme aux enseignements de l'invention qui est illustré en position de repos ;
- la figure 4 est une vue similaire à celle de la figure 3 sur laquelle le dispositif élastique est illustré dans son état maximal de compression des moyens élastiques ; et
- les figures 5 et 6 sont des vues similaires à celles des figures 3 et 4 qui illustrent un deuxième mode de réalisation d'un dispositif élastique conforme aux enseignements de l'invention.

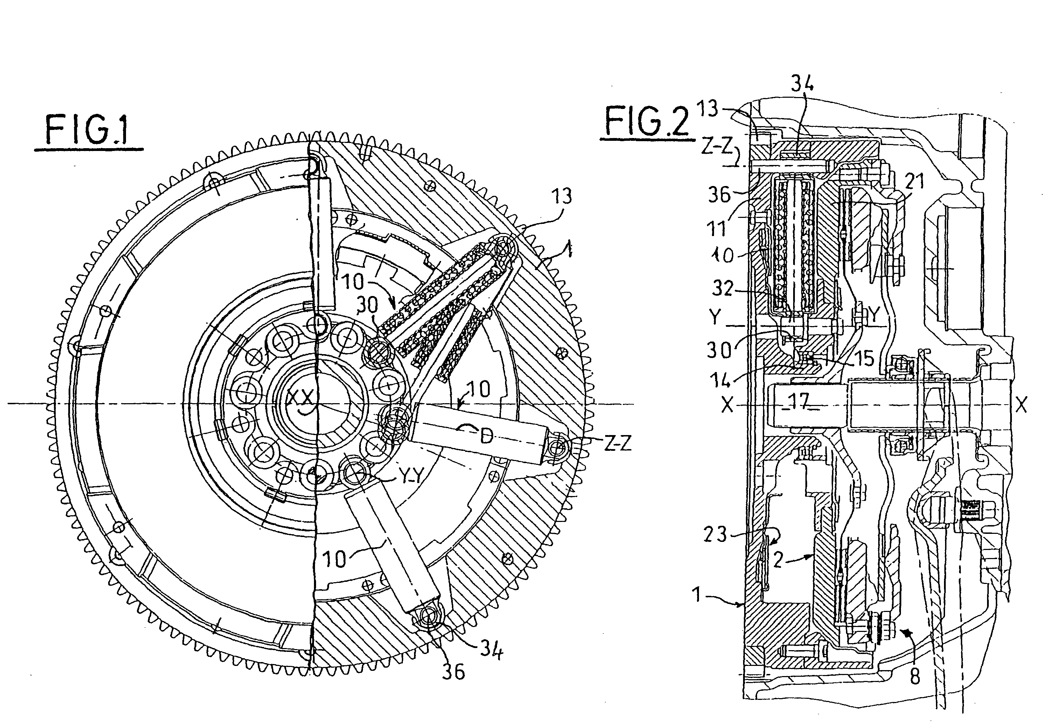

On a représenté aux figures 1 et 2 un double volant amortisseur de torsion comportant deux parties coaxiales 1 et 2 montées mobiles en rotation l'une par rapport à l'autre, autour d'un axe commun X-X, à l'encontre d'une série de dispositifs élastiques d'amortissement 10.

La première partie 1 consiste en un plateau 11 et la seconde partie consiste aussi en un plateau 21 s'étendant parallèlement au plateau 11.

Les plateaux 11 et 21 sont en matière moulable, usuellement en fonte, pour augmenter leur inertie. Les parties 1 et 2 constituent donc en des masses tournantes.

La seconde masse tournante 2 est montée à rotation sur un moyeu tubulaire 14 porté par la première masse tournante 11.

Le moyeu 14 est une pièce de forme générale cylindrique coaxiale, d'axe X-X, aux masses tournantes 1 et 2 qui est ici réalisée d'un seul tenant avec le plateau 11.

En variante, le moyeu 14 peut être rapporté sur le plateau 11, et un palier 15, ici un roulement à billes, est interposé entre la périphérie externe du moyeu 14 et la périphérie interne du plateau 21.

La seconde masse 2, qui est montée tournante sur la masse 1 tournante par l'intermédiaire du palier 15, constitue par son plateau 21 le plateau de réaction d'un embrayage à friction 13 comportant un couvercle fixé sur le plateau 21, un diaphragme s'appuyant sur le fond du couvercle pour solliciter un plateau de pression en direction du plateau de réaction 21 pour serrer les garnitures de friction d'un disque de friction entre lesdits plateaux.

Pour connaître en détails l'agencement d'un embrayage à friction en association avec un double volant amortisseur, on peut par exemple se reporter au document FR-A-1.524.350.

La première masse tournante est prévue pour être reliée, par exemple des vis non représentées, par sa périphérie interne à un arbre menant, ici au vilebrequin (non représenté) du moteur à combustion interne du véhicule automobile, tandis que la seconde masse tournante est liée en rotation de manière débrayable par l'intermédiaire de l'embrayage 13 à l'arbre d'entrée 17 de la boîte de vitesses du véhicule.

La première masse tournante 1 formant plateau est constituée pour l'essentiel par une partie centrale 11 d'orientation transversale, en forme de plaque ou de flasque, qui porte à sa périphérie externe une couronne de démarreur 13 prévue pour être entraînée par le pignon d'un démarreur (non représenté) du moteur à combustion d'un véhicule automobile équipé du volant amortisseur.

Aux figures 1 et 2, les moyens élastiques d'amortissement comportent une série de dispositifs élastiques 10 et ils interviennent globalement dans la direction radiale entre les plateaux 11 et 21, et donc entre les deux masses tournantes 1 et 2.

Selon une conception connue, chaque dispositif élastique comporte une première tête d'articulation 30 agencée radialement vers l'intérieur de manière à permettre le montage articulé du dispositif élastique autour d'un axe Y-Y parallèle à l'axe X-X.

Dans le mode de réalisation illustré aux figures 1 et 2, chaque première tête d'articulation 30 est montée, articulée sur la seconde masse tournante 2 par l'intermédiaire d'un axe d'articulation 32 riveté sur la partie située radialement vers l'intérieur du plateau 21 de la seconde masse tournante 2.

Chaque dispositif élastique 10 est aussi monté articulé sur la première masse tournante 1, radialement vers l'extérieur, au moyen d'une seconde tête d'articulation 34 qui est traversée par une tige d'articulation 36 portée par la première masse tournante 1 et d'axe Z-Z parallèle aux axes X-X et Y-Y.

De par sa conception, chaque dispositif élastique 10 a tendance à rapprocher radialement l'une vers l'autre ses deux têtes d'articulation 30 et 34, c'est-à-dire à constituer globalement l'équivalent d'un ressort de traction qui tend à s'allonger (voir figure 1) lorsque les deux masses tournantes 1 et 2 tournent l'une par rapport à l'autre, les dispositifs élastiques 10 rappelant élastiquement les masses tournantes 1 et 2 dans leur position angulaire de repos illustrée aux figures 1 et 2, dans lesquelles chaque dispositif 10 d'orientation globalement radiale, c'est-à-dire que la droite D passant par les axes Z-Z et Y-Y est globalement d'orientation radiale.

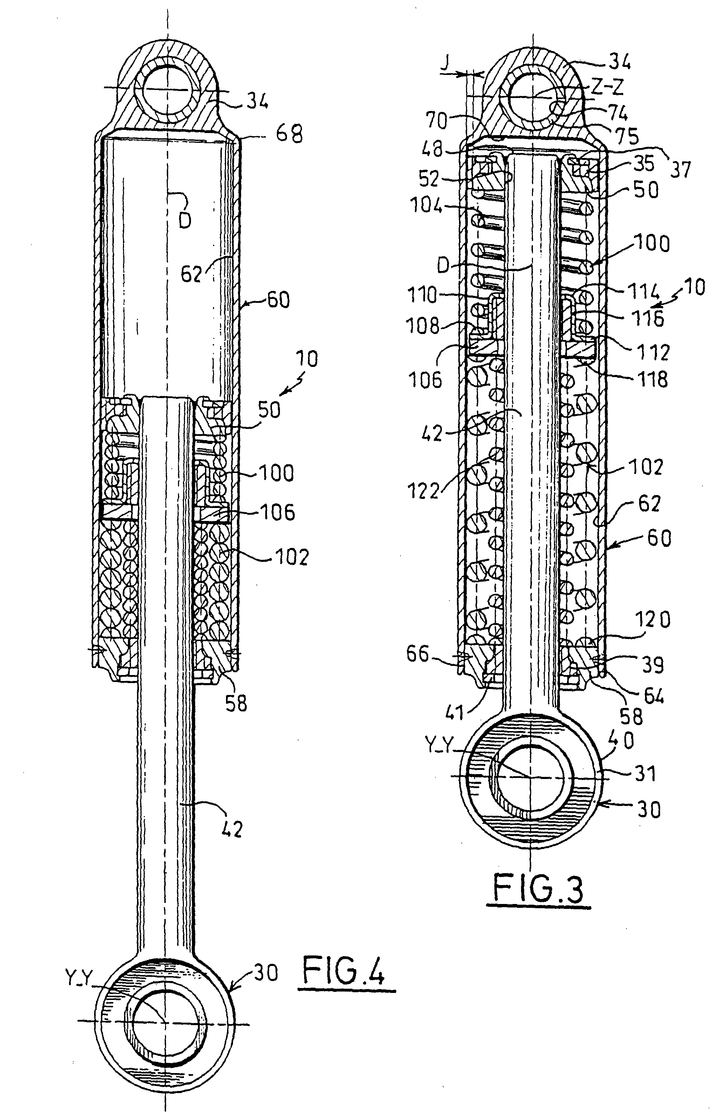

On décrira maintenant en détail deux conceptions d'un dispositif élastique 10 conforme aux enseignements de l'invention en se reportant notamment aux figures 3 à 6 sur lesquelles des composants identiques, similaires ou équivalents sont désignés par les mêmes chiffres de référence.

Chaque dispositif élastique 10, représenté aux figures, est constitué par deux éléments télescopiques susceptibles de coulisser axialement l'une par rapport à l'autre selon la droite D qui est l'axe géométrique de coulissement.

Le premier élément télescopique est constitué par la tête d'articulation 30 réalisée sous la forme d'un anneau qui se prolonge radialement depuis sa surface périphérique cylindrique 40 par une tige massive 42 orientée selon la direction D de coulissement télescopique.

L'anneau 31 reçoit un rivet 32 avec interposition d'une douille de palier non référencée.

La tige 42 est par exemple fixée par soudage sur l'anneau d'articulation 30, ou réalisée venue de matière, et elle s'étend axialement à l'intérieur de moyens élastiques de compression que comporte chaque dispositif élastique 10.

L'extrémité libre 48 de la tige 42 traverse une première rondelle métallique 50.

L'extrémité libre 48 est soudée dans un trou 52 de la première rondelle 50.

La réalisation de la rondelle 50, qui constitue la première rondelle d'appui pour la première extrémité axiale des moyens élastiques, est telle qu'elle porte à sa périphérie externe un patin annulaire de glissement 35 en matériau à faible coefficient de frottement qui lui est fixée par un anneau élastique de retenue axiale 37 reçu dans une gorge de la rondelle 50.

La seconde extrémité axiale des moyens élastiques est en appui axial contre une seconde rondelle d'appui métallique 58.

La rondelle 58 est traversée à coulissement par le corps de la tige 42. A cet effet, la rondelle métallique 58 porte à sa périphérie interne un patin annulaire de glissement 39 en matériau à faible coefficient de frottement qui lui est fixée par un anneau élastique de retenue axiale 41 reçu dans une gorge de la rondelle 58.

La seconde rondelle 58 appartient au second élément télescopique du dispositif élastique 10 qui comporte la seconde tête d'articulation 34 et un corps externe 60 de forme générale tubulaire à section cylindrique annulaire circulaire.

Le corps tubulaire 60 un tube de guidage, qui est une pièce métallique traitée, dont les dimensions sont telles que la première rondelle d'appui 50 avec son patin de glissement est reçue en coulissement à l'intérieur 62 du corps 60, tandis que son bord d'extrémité libre 64 est fixé, par exemple par sertissage ou par soudage contre le bord périphérique cylindrique 66 de la seconde rondelle d'appui 58.

A son extrémité axiale 68 opposée au bord 64, le corps tubulaire 60 se prolonge par un fond transversal 70 en regard duquel s'étend la première rondelle d'appui 50. Ce fond 70 se prolonge par une tête 34 percée en son centre par un trou 74 destiné à recevoir la tige d'articulation 36 avec interposition d'une douille de palier 75.

Conformément aux enseignements de l'invention, les moyens élastiques interposés axialement entre les deux rondelles 50 et 58 sont constituées par au moins deux ressorts hélicoïdaux 100 et 102 de raideurs distinctes qui sont montés en série du point de vue de leur action élastique en compression axiale.

Le premier ressort 100, qui est le ressort de raideur la plus forte, est ici un ressort hélicoïdal de compression qui est interposé axialement entre la première rondelle d'appui 50, contre laquelle il prend appui par sa première spire d'extrémité supérieure 104, en considérant les figures, et une rondelle intermédiaire 106 contre laquelle il prend appui indirectement par l'intermédiaire de sa seconde spire d'extrémité inférieure 108 ; la rondelle 106 étant traversée axialement avec jeu radial par le corps de la tige 42 et étant elle-même reçu avec jeu radial à l'intérieur du second élément tubulaire 60.

Afin de guider et de centrer le premier ressort 100 en déplacement axial à l'intérieur de l'élément tubulaire 60 et le long de la tige 42, sa seconde extrémité inférieure 108 enserre une cage cylindrique 110 dont le bord inférieur rabattu radialement vers l'extérieur 112 est en appui sur la face supérieure de la rondelle 106 et dont le bord rabattu radialement vers l'intérieur 114 est traversé avec jeu par la tige 42.

La cage 110 loge intérieurement un palier cylindrique annulaire 116 en matériau à faible coefficient de frottement qui coulisse le long du corps de la tige 42 tout en guidant en coulissement l'extrémité inférieure du premier ressort 100 et ainsi l'ensemble de ce premier ressort. Cette cage 110 est métallique et est réalisée par emboutissage et protège le palier 116.

Comme on peut le voir notamment à la figure 3, et conformément aux enseignements de l'invention, le premier ressort 100 de raideur la plus forte présente un diamètre extérieur hors tout réduit par rapport au diamètre de la surface interne cylindrique 62 du second élément tubulaire 60 de manière à ménager en permanence un jeu radial "J" entre ces deux éléments pour éviter l'apparition de tout phénomène de frottement, et donc des efforts de frottement en découlant, entre le premier ressort 100 et le second élément tubulaire 60.

Le second ressort 102 est un ressort hélicoïdal de compression monté à la partie inférieure du dispositif 10 qui est un ressort de plus grand diamètre que le premier ressort 100 et qui est lui-même réalisé dans un fil de plus grand diamètre.

Le second ressort 102 prend appui axialement par sa première spire d'extrémité supérieure 118 contre la face inférieure de la rondelle intermédiaire 106 et il prend appui axialement par sa seconde spire d'extrémité inférieure 120 contre la seconde rondelle d'appui 58.

Afin de présenter une raideur suffisante lorsqu'il intervient au cours de la première phase de la course d'intervention du dispositif élastique 10, le second ressort 102 de plus faible raideur présente les dimensions maximales admissibles de manière à pouvoir être reçu à l'intérieur du second élément tubulaire 60, c'est-à-dire que la surface externe de ses spires est en partie en contact de frottement avec la surface interne 62 de l'élément tubulaire 60.

Afin d'accroître encore la raideur du deuxième ressort 102, il peut être associé en parallèle avec un autre ressort hélicoïdal à boudin coaxial et interne 122 selon un montage dit "compound".

Lorsque le dispositif élastique 10 intervient, c'est-à-dire lorsque les deux masses 1 et 2 tournent relativement l'une par rapport à l'autre, la tige 42 se déplace par rapport à l'élément tubulaire 60 vers le bas en considérant les figures.

Du fait de sa raideur la plus faible dans une première phase, c'est le premier ressort 102 qui intervient en premier, c'est-à-dire qui commence à se comprimer et ceci sans que le premier ressort 100 puisse provoquer de frottement parasite susceptible d'affecter les autres dispositifs de frottement à action axiale 23 que comporte le double volant amortisseur (voir figure 2). Ce dispositif 23 comporte une rondelle de commande entraînée en rotation par la tige 36 comme décrit dans le document FR 96 12098 déposé le 30/09/1996. Plus précisément, la tige 42 entraîne la rondelle 50 qui entraîne la rondelle intermédiaire 106 par l'intermédiaire du premier ressort 100 plus raide, et elle agit alors directement sur les ressorts 102 et 122 à la manière d'un dispositif classique 10 du type de celui illustré aux figures 1 et 2, c'est-à-dire en les comprimant jusqu'à atteindre la position à spires jointives, tout en générant éventuellement un phénomène de frottement parasite entre le ressort 102 et la surface cylindrique interne 62 du second élément tubulaire 60. Le ressort 100 intervient dans une deuxième phase, la tige 42 entraînant la rondelle 50 qui entraîne le ressort 100 comprimé alors entre la rondelle 50 et la rondelle intermédiaire 106, qui est alors fixe du fait que les ressorts 102, 122 sont à spires jointives.

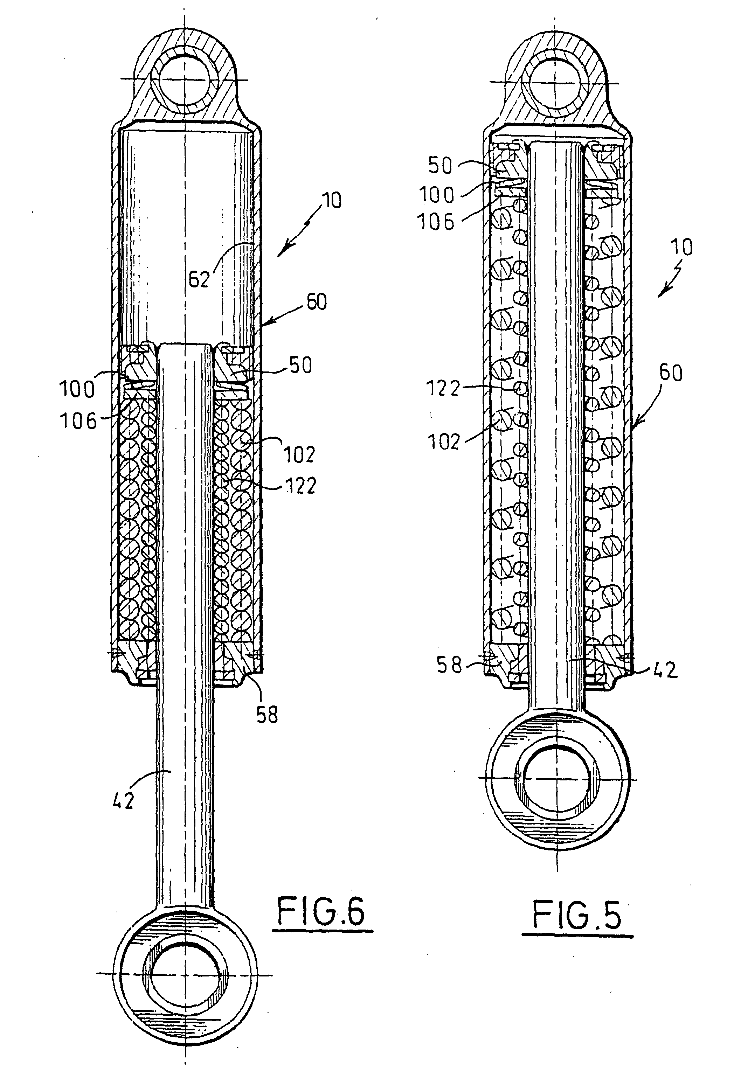

A la fin de la deuxième phase, tous les ressorts sont à spires jointives comme visible à la figure 4.

Le ressort 100 ne vient jamais en contact avec la surface 62 du fait du jeu "J" et on bénéficie d'une élasticité quand les ressorts 102, 122 sont à spires jointives.

La fin d'intervention du premier ressort 100 correspond à son état comprimé, c'est-à-dire lorsque toutes les spires sont jointives.

Dans la variante de réalisation illustrée aux figures 5 et 6, le premier ressort 100 de raideur la plus forte est constitué par une rondelle élastique tronconique qui est directement interposée entre la première rondelle d'appui 50 et la rondelle intermédiaire 46.

Les autres éléments ou composants du dispositif élastique 10 selon ce second mode de réalisation sont identiques à ceux décrits en référence au premier mode de réalisation illustré aux figures 3 et 4 et le fonctionnement du dispositif en deux phases successives sans frottement parasite puis avec éventuellement des frottements parasites est identique à ce qui a été décrit précédemment en référence au premier mode de réalisation.

L'invention n'est pas limitée aux modes de réalisation qui viennent d'être décrits.

La nature de chacun des ressorts en série, ou groupe de ressorts en série, peut être différente des exemples illustrés.

Par exemple, le deuxième ressort de plus faible raideur peut être constitué par un bloc élastique en matériau élastomère compressible. Dans tous les cas, le deuxième ressort n'est pas gênant à la fin du débattement angulaire relatif entre les deux masses tournantes. Le premier ressort ne frotte jamais. On ne risque pas de bloquer l'un des dispositifs élastiques car on bénéficie d'une raideur d'élasticité quand les deuxièmes ressorts sont bloqués.

## Revendications

1. Dispositif élastique (10) pour un double volant amortisseur destiné à être implanté radialement pour accoupler élastiquement deux masses tournantes (1, 2) du volant dites première masse tournante (2) et deuxième masse tournante (1), comportant des moyens élastiques (100, 102, 122) comprimés axialement entre deux éléments télescopiques (42, 60) comprenant :
- un premier élément (42) comportant une première tête (30), pour son articulation sur la première masse tournante (2), qui se prolonge axialement par une tige centrale (42) qui traverse les moyens élastiques et qui se termine par une première rondelle d'appui (50) qui s'étend radialement vers l'extérieur de la tige centrale (42) en regard d'une première extrémité (104) des moyens élastiques ; et
- un second élément (60) comportant une seconde tête (34), pour son articulation sur la seconde masse tournante (1), qui se prolonge axialement par un corps externe de forme générale tubulaire (60) qui entoure les moyens élastiques et qui se termine par une seconde rondelle d'appui (58) qui s'étend radialement vers l'intérieur du corps externe en regard d'une seconde extrémité (120) des moyens élastiques et qui est traversée par la tige centrale (42) du premier élément, **caractérisé en ce que** les moyens élastiques comportent au moins deux ressorts (100, 102) de raideurs différentes qui sont montés axialement en série entre les première (50) et seconde (58) rondelles d'appui, qui sont traversés par la tige centrale (42), et parmi lesquels un premier ressort (100), de raideur la plus forte, intervient sans frottement entre son corps et la surface interne (62) du corps tubulaire du second élément (60).

2. Dispositif élastique selon la revendication 1, **caractérisé en ce qu'**une rondelle intermédiaire (106) est interposée axialement entre les extrémités en vis-à-vis (108, 118) des deux ressorts (100, 102) en série.

3. Dispositif élastique selon l'une quelconque des revendications précédentes, **caractérisé en ce que** ledit premier ressort (100) est un ressort hélicoïdal de compression dont le diamètre extérieur moyen est inférieur au diamètre interne du corps tubulaire (60) du second élément de manière à ménager un jeu radial (J) entre le premier ressort (100) et le corps tubulaire (60, 62).

4. Dispositif élastique selon la revendication précédente, **caractérisé en ce que** l'extrémité (108) du premier ressort hélicoïdal (100) adjacente au second (102, 118) des deux ressorts (100, 102) est guidée en coulissement le long de la tige centrale (42) par l'intermédiaire d'un patin annulaire de glissement (116).

5. Dispositif élastique selon l'une des revendications 1 ou 2, **caractérisé en ce que** ledit premier ressort (100) est une rondelle élastique.

6. Dispositif élastique selon l'une quelconque des revendications précédentes, **caractérisé en ce que** le second (102) des deux ressorts montés en série, de raideur la plus faible, est un ressort hélicoïdal de compression.

7. Dispositif élastique selon la revendication précédente, **caractérisé en ce que** le second ressort (102) est constitué par deux ressorts hélicoïdaux (102, 122) coaxiaux intervenant simultanément et en parallèle.

8. Dispositif élastique selon l'une quelconque des revendications précédentes, **caractérisé en ce que** la première rondelle d'appui (50) est guidée en coulissement le long de la surface interne (62) du corps tubulaire (60) du second élément par l'intermédiaire d'un patin annulaire de glissement (35).

9. Dispositif élastique selon l'une quelconque des revendications précédentes, **caractérisé en ce que** la seconde rondelle d'appui (58) est guidée en coulissement le long de la tige (42) centrale par l'intermédiaire d'un patin annulaire de glissement (39).

## Claims

1. Elastic device (10) for a double-damping flywheel intended to be located radially in order to elastically couple two rotating masses (1, 2) of the flywheel, referred as the first rotating mass (2) and the second rotating mass (1), comprising elastic means (100, 102, 122) compressed axially between two telescopic elements (42, 60) comprising:
- a first element (42) comprising a first head (30) for articulation thereof on the first rotating mass (2), which is extended axially by a central rod (42) which passes through the elastic means and which terminates in a first support washer (50) which extends radially towards the outside of the central rod (42) opposite a first end (104) of the elastic means; and
- a second element (60) comprising a second head (34) for articulation thereof on the second rotating mass (1), which is extended axially by an external body (60) of roughly tubular shape which surrounds the elastic means and which terminates in a second support washer (58) which extends radially towards the inside of the external body opposite a second end (120) of the elastic means and which has the central rod (42) of the first element passing through it, **characterised in that** the elastic means comprise at least two springs (100, 102) with different thicknesses which are mounted axially in series between the first (50) and second (58) support washers, which have the central rod (42) passing through them, and amongst which a first spring (100), with the greatest stiffness, acts without friction between its body and the internal surface (62) of the tubular body of the second element (60).

2. Elastic device according to Claim 1, **characterised in that** an intermediate washer (106) is interposed axially between the facing ends (108, 118) of the two springs (100, 102) in series.

3. Elastic device according to any one of the preceding claims, **characterised in that** the said first spring (100) is a helical compression spring whose mean outside diameter is less than the inside diameter of the tubular body (60) of the second element so as to provide a radial clearance (J) between the first spring (100) and the tubular body (60, 62).

4. Elastic device according to the preceding claim, **characterised in that** the end (108) of the first helical spring (100) adjacent to the second (102, 118) of the two springs (100, 102) is slidably guided along the central rod (42) by means of an annular sliding shoe (116).

5. Elastic device according to one of Claims 1 or 2, **characterised in that** the said first spring (100) is an elastic washer.

6. Elastic device according to any one of the preceding claims, **characterised in that** the second (102) of the two springs mounted in series, with the least stiffness, is a helical compression spring.

7. Elastic device according to the preceding claim, **characterised in that** the second spring (102) consists of two coaxial helical springs (102, 122) acting simultaneously and in parallel.

8. Elastic device according to any one of the preceding claims, **characterised in that** the first support washer (50) is slidably guided along the internal surface (62) of the tubular body (60) of the second element by means of an annular sliding shoe (35).

9. Elastic device according to any one of the preceding claims, **characterised in that** the second support washer (58) is slidably guided along the central rod (42) by means of an annular sliding shoe (39).

## Patentansprüche

1. Elastische Vorrichtung (10) für ein Zweimassen-Dämpfungsschwungrad, die für eine radiale Anordnung bestimmt ist, um zwei umlaufenden Massen (1, 2) des Schwungrads, die als erste umlaufende Masse (2) und als zweite umlaufende Masse (1) bezeichnet werden, elastisch zu verbinden, mit elastischen Mitteln (100, 102, 122), die axial zwischen zwei Teleskopelementen (42, 60) zusammengedrückt werden, umfassend:
- ein erstes Element (42) mit einem ersten Kopf (30) für seine Anlenkung an der ersten umlaufenden Masse (2), der axial durch einen mittigen Schaft (42) verlängert wird, der durch die elastischen Mittel hindurchgeht und der in einer ersten Auflagescheibe (50) endet, die sich radial nach außen von dem mittigen Schaft (42) gegenüber einem ersten Ende (104) der elastischen Mittel erstreckt; und
- ein zweites Element (60) mit einem zweiten Kopf (34) für seine Anlenkung an der zweiten umlaufenden Masse (1), der axial durch einen allgemein rohrförmigen Außenkörper (60) verlängert wird, der die elastischen Mittel umgibt und der in einer zweiten Auflagescheibe (58) endet, die sich radial nach innen von dem Außenkörper gegenüber einem zweiten Ende (120) der elastischen Mittel erstreckt und durch die der mittige Schaft (42) des ersten Elements hindurchgeht,
**dadurch gekennzeichnet, dass** die elastischen Mittel wenigstens zwei Federn (100, 102) mit unterschiedlicher Steifigkeit umfassen, die axial in Reihe zwischen der ersten (50) und zweiten (58) Auflagescheibe angebracht sind und durch die der mittige Schaft (42) hindurchgeht und bei denen eine erste Feder (100) mit größerer Steifigkeit ohne Reibung zwischen ihrem Körper und der Innenfläche (62) des rohrförmigen Körpers des zweiten Elements (60) zum Einsatz kommt.

2. Elastische Vorrichtung nach Anspruch 1, **dadurch gekennzeichnet, dass** eine Zwischenscheibe (106) axial zwischen den einander gegenüberliegenden Enden (108, 118) der zwei in Reihe angeordneten Federn (100, 102) eingefügt ist.

3. Elastische Vorrichtung nach einem der vorangehenden Ansprüche, **dadurch gekennzeichnet, dass** die erste Feder (100) eine Schraubendruckfeder ist, deren mittlerer Außendurchmesser kleiner als der Innendurchmesser des rohrförmigen Körpers (60) des zweiten Elements ist, so dass ein radiales Spiel (J) zwischen der ersten Feder (100) und dem rohrförmigen Körper (60, 62) geschaffen wird.

4. Elastische Vorrichtung nach dem vorangehenden Anspruch, **dadurch gekennzeichnet,dass** das an die zweite (102, 118) der zwei Federn (100, 102) angrenzende Ende (108) der ersten Schraubenfeder (100) über ein ringförmiges Gleitsegment (116) am mittigen Schaft (42) entlang gleitend geführt ist.

5. Elastische Vorrichtung nach einem der Ansprüche 1 oder 2, **dadurch gekennzeichnet,dass** die erste Feder (100) eine Federscheibe ist.

6. Elastische Vorrichtung nach einem der vorangehenden Ansprüche, **dadurch gekennzeichnet,dass** die zweite (102) der zwei in Reihe angeordneten Federn mit geringerer Steifigkeit eine Schraubendruckfeder ist.

7. Elastische Vorrichtung nach dem vorangehenden Anspruch, **dadurch gekennzeichnet, dass** die zweite Feder (102) aus zwei koaxialen Schraubenfedern (102, 122) besteht, die gleichzeitig und parallel wirksam sind.

8. Elastische Vorrichtung nach einem der vorangehenden Ansprüche, **dadurch gekennzeichnet, dass** die erste Auflagescheibe (50) durch ein ringförmiges Gleitsegment (35) an der Innenfläche (62) des rohrförmigen Körpers (60) des zweiten Elements entlang gleitend geführt ist.

9. Elastische Vorrichtung nach einem der vorangehenden Ansprüche, **dadurch gekennzeichnet, dass** die zweite Auflagescheibe (58) durch ein ringförmiges Gleitsegment (39) am mittigen Schaft (42) entlang gleitend geführt ist.
